# EUROPEAN PATENT SPECIFICATION

(11) **EP 4 651 471 B1**
(45) Date of publication and mention of the grant of the patent: **16.09.2026**
(21) Application number: 25153912.8
(22) Date of filing: 24.01.2025
(51) Int. Cl.: H04L 67/306

(54) **INFORMATION PROCESSING SYSTEM AND PROGRAM**
INFORMATIONSVERARBEITUNGSSYSTEM UND -PROGRAMM
SYSTÈME ET PROGRAMME DE TRAITEMENT D'INFORMATIONS

(30) Priority: 16.05.2024 JP 2024080251
(43) Date of publication of application: 19.11.2025
(73) Proprietor: FUJIFILM Business Innovation Corp., Minato-ku Tokyo (JP)
(72) Inventor: TAJIMA, Ryumon, Yokohama-shi, Kanagawa (JP)
(74) Representative: Kurig, Thomas

(56) References cited:
- CN-C- 100 571 179
- US-A1- 2018 059 995
- US-B2- 8 126 920

## Description

### Background

### (i) Technical Field

The present disclosure relates to an information processing system and a program.

### (ii) Related Art

Japanese Unexamined Patent Application Publication No. 2019-22171 describes a communication control device including storage means for storing user information for each user, and determination means for determining whether or not a communication line to be used is available based on the user information of an intending user, in which the user information is stored in association with user identification information set for each user and a communication line available for each piece of user identification information, respectively.
US 8 126 920 B2 discloses a hierarchical security model for networked computer users. Files and resources are controlled or created by users within the network. Each user within the network has an account that is managed by a network administrator. The account specifies the user identifier and password. Users are grouped into organizations depending upon function or other organizational parameter. The groups within the network are organized hierarchically in terms of access and control privileges. Users within a higher level group may exercise access and control privileges over files or resources owned by users in a lower level group. The account for each user further specifies the group that the owner belongs to and an identifier for any higher level groups that have access privileges over the user's group. All users within a group inherit the rights and restrictions of the group.

### Summary

In some cases, in response to a request to use an information processing system by a user, a network available to the user is specified. In this case, it is assumed that a configuration is adopted in which a network associated with the user by association information is specified as an available network. However, since such a configuration is adopted, a workload increases when the association between a large number of users and networks is changed.

The present invention is provided in the appended claims. The following disclosure serves a better understanding of the present invention. Accordingly, it is an object of the present disclosure to make it possible to specify, in response to a request to use an information processing system by a user, a network available to the user without increasing a workload when changing the association between a large number of users and networks.

According to a first aspect of the present disclosure, there is provided an information processing system including one or more processors configured to, in response to a request to use the information processing system by a user, specify a group associated with the user by first association information, and when the group is specified, specify a network associated with the group by second association information separated from the first association information among a plurality of networks connected to the information processing system as a network available to the user.

According to a second aspect of the present disclosure, in the information processing system according to the first aspect, the first association information may be association information in which each of a plurality of users is associated with a corresponding one of a plurality of groups.

According to a third aspect of the present disclosure, in the information processing system according to the first aspect, the second association information may be association information in which each of a plurality of groups is associated with a corresponding one of the plurality of networks.

According to a fourth aspect of the present disclosure, in the information processing system according to any one of the first to third aspects, the group may be a set of users obtained by dividing a plurality of users according to a role assigned to each of the plurality of users.

According to a fifth aspect of the present disclosure, in the information processing system according to any one of the first to fourth aspects, the one or more processors may be configured to, in response to a request to use the information processing system by the user, when none of the plurality of networks is associated with the user, specify a group associated with the user by the first association information; and specify a network associated with the group by the second association information as a network available to the user.

According to a sixth aspect of the present disclosure, in the information processing system according to any one of the first to fourth aspects, the one or more processors may be configured to, in response to a request to use the information processing system by the user, when none of the plurality of networks is associated with the user, specify a predetermined network as a network available to the user.

According to a seventh aspect of the present disclosure, in the information processing system according to the fifth or sixth aspect, the one or more processors may be configured to, in response to a request to use the information processing system by the user, when a specific network among the plurality of networks is associated with the user, specify the specific network as a network available to the user.

According to an eighth aspect of the present disclosure, in the information processing system according to any one of the first to seventh aspects, the first association information may be one piece of association information in which each of a plurality of users is associated with a corresponding one of a plurality of groups by one association method, and the second association information may be one piece of association information selected from a plurality of pieces of association information in which each of a plurality of groups is associated with a corresponding one of the plurality of networks by a plurality of association methods.

According to a ninth aspect of the present disclosure, in the information processing system according to the eighth aspect, the second association information may be one piece of association information selected from the plurality of pieces of association information in accordance with an information processing apparatus that has received a request for use by the user.

According to a tenth aspect of the present disclosure, in the information processing system according to any one of the first to ninth aspects, the one or more processors may be configured to, in response to a request to create the second association information, create the second association information in which a plurality of groups is associated with the plurality of networks.

According to an eleventh aspect of the present disclosure, there is provided a program causing a computer to execute a process including: specifying, in response to a request to use an information processing system by a user, a group associated with the user by first association information; and specifying, when the group is specified, a network associated with the group by second association information separated from the first association information among a plurality of networks connected to the information processing system as a network available to the user.

According to the first aspect of the present disclosure, it is possible to specify, in response to a request to use the information processing system by a user, a network available to the user without increasing a workload when changing the association between a large number of users and networks.

According to the second aspect of the present disclosure, in specifying the network available to the user, it is possible to specify the group associated with the user by association information in which each of a plurality of users is associated with a corresponding one of a plurality of groups.

According to the third aspect of the present disclosure, in specifying the network available to the user, it is possible to specify the network associated with the group by association information in which each of a plurality of groups is associated with a corresponding one of the plurality of networks.

According to the fourth aspect of the present disclosure, in specifying the network available to the user, it is possible to specify a set of users obtained by dividing a plurality of users according to a role assigned to each of the plurality of users.

According to the fifth aspect of the present disclosure, even when none of the networks is associated with the user, it is possible to specify a network associated with a group associated with the user, as the network available to the user.

According to the sixth aspect of the present disclosure, even when none of the networks is associated with the user, it is possible to specify a predetermined network as the network available to the user.

According to the seventh aspect of the present disclosure, when a specific network is associated with the user, it is possible to specify the specific network as the network available to the user.

According to the eighth aspect of the present disclosure, in specifying the network available to the user, it is possible to specify the network associated with the group by one piece of association information selected from a plurality of pieces of association information in which each of a plurality of groups is associated with a corresponding one of the plurality of networks by a plurality of association methods.

According to the ninth aspect of the present disclosure, in specifying the network available to the user, it is possible to specify the network associated with the group by one piece of association information selected in accordance with the information processing apparatus.

According to the tenth aspect of the present disclosure, it is possible to create association information between groups and networks in response to a request for creation.

According to the eleventh aspect of the present disclosure, it is possible to specify, in response to a request to use an information processing system by a user, a network available to the user without increasing a workload when changing the association between a large number of users and networks.

### Brief Description of the Drawings

Exemplary embodiments of the present disclosure will be described in detail based on the following figures, wherein:
Fig. 1 is a diagram illustrating an overall configuration example of an image processing system according to a first exemplary embodiment;
Fig. 2 is a diagram illustrating a hardware configuration example of an image processing apparatus according to the first exemplary embodiment;
Fig. 3 is a diagram schematically illustrating an example of a role;
Fig. 4 is a diagram illustrating an example of user information when the role as illustrated in Fig. 3 is set;
Fig. 5 is a diagram schematically illustrating an example of matching between a role and an available network;
Fig. 6 is a diagram illustrating an example of a matching table representing matching between a role and an available network as illustrated in Fig. 5;
Fig. 7 is a diagram schematically illustrating an example of determination of an available network of a user;
Fig. 8 is a block diagram illustrating a functional configuration example of the image processing apparatus according to the first exemplary embodiment;
Fig. 9 is a flowchart illustrating an operation example of the image processing apparatus of a first aspect;
Fig. 10 is a flowchart illustrating an operation example of the image processing apparatus of a second aspect;
Fig. 11 is a flowchart illustrating an operation example of the image processing apparatus of a third aspect;
Fig. 12 is a diagram illustrating an overall configuration example of an image processing system according to a second exemplary embodiment; and
Fig. 13 is a diagram illustrating a specific example of the image processing system according to the second exemplary embodiment.

### Detailed Description

Hereinafter, exemplary embodiments will be described in detail with reference to the accompanying drawings.

### Outline of Present Exemplary Embodiment

The present exemplary embodiment provides an information processing system that specifies, in response to a request to use the information processing system by a user, a group associated with the user by first association information, and when the group is specified, specifies a network associated with the group by second association information separated from the first association information among a plurality of networks connected to the information processing system as a network available to the user.

Here, the "system" may be constituted by a single apparatus, or may be constituted by a plurality of apparatuses. In the following, an information processing system constituted by a single apparatus will be described as an example. An image processing apparatus will be described as an example of the single apparatus.

### First Exemplary Embodiment

### Overall Configuration of Image Processing System

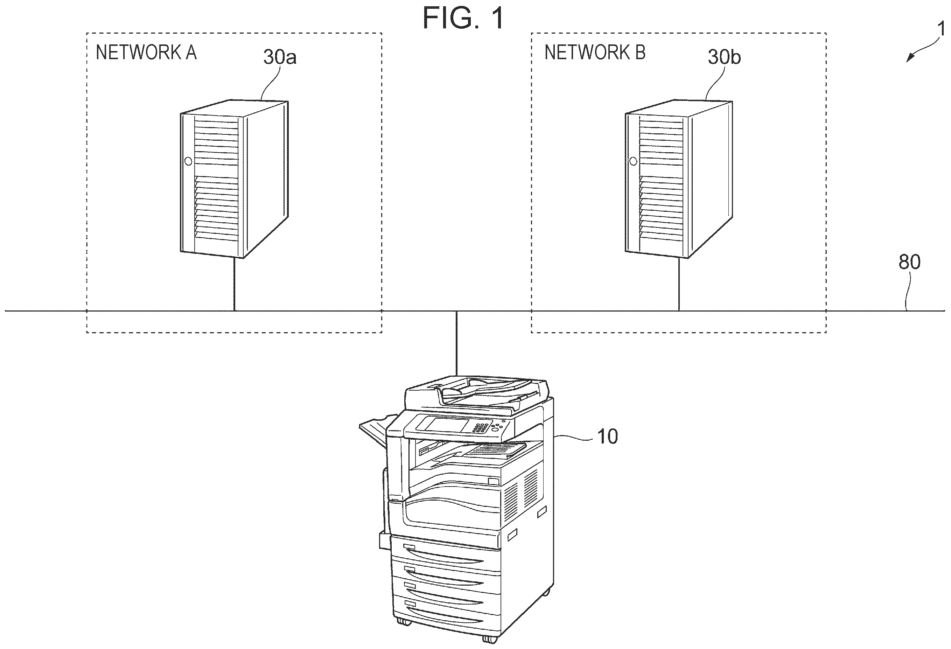

Fig. 1 is a diagram illustrating an overall configuration example of an image processing system 1 according to the first exemplary embodiment. As illustrated, the image processing system 1 includes an image processing apparatus 10 and storage servers 30a and 30b. The image processing apparatus 10 is connected to the storage servers 30a and 30b via a communication line 80. As illustrated, the storage servers 30a and 30b exist in networks A and B, respectively.

The image processing apparatus 10 is an apparatus that performs image processing. The image processing here includes image formation on a recording medium such as paper and image reading from the recording medium such as paper. The image processing also includes image transmission to a public line and image reception from the public line. The image processing apparatus 10 is a printer from the viewpoint of performing only image formation. The image processing apparatus 10 is a copier from the viewpoint of performing image reading and image formation. The image processing apparatus 10 is a facsimile from the viewpoint of performing image reading and image transmission, or image reception and image formation. Here, the image processing apparatus 10 has a so-called multi-interface configuration including a plurality of network interfaces. In the illustrated example, the plurality of network interfaces is a network interface for connecting to the networks A and B. Although only one image processing apparatus 10 is illustrated in Fig. 1, a plurality of image processing apparatuses 10 may exist.

The storage servers 30a and 30b are server computers that store data uploaded by a user. In particular, in the present exemplary embodiment, the storage servers 30a and 30b store image data read by the image processing apparatus 10. Although the storage servers 30a and 30b are illustrated in Fig. 1, they may also be referred to as a storage server 30 when they are not distinguished from each other. Although only two storage servers 30 are illustrated in Fig. 1, three or more storage servers 30 may exist.

The communication line 80 is a line used for information communication between the image processing apparatus 10 and the storage server 30. As the communication line 80, for example, the Internet or a local area network (LAN) may be used.

### Hardware Configuration of Image Processing Apparatus

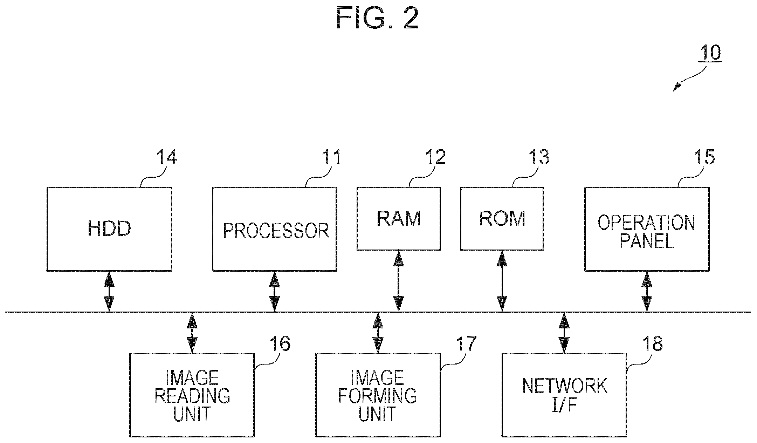

Fig. 2 is a diagram illustrating a hardware configuration example of the image processing apparatus 10 according to the first exemplary embodiment. As illustrated, the image processing apparatus 10 includes a processor 11. The image processing apparatus 10 further includes a random access memory (RAM) 12, a read only memory (ROM) 13, and a hard disk drive (HDD) 14. The image processing apparatus 10 further includes an operation panel 15. The image processing apparatus 10 further includes an image reading unit 16 and an image forming unit 17. The image processing apparatus 10 further includes a network interface (hereinafter, written as a "network I/F") 18.

The processor 11 loads various programs stored in the ROM 13 or the like into the RAM 12. The processor 11 executes the program to realize each function described below.

The RAM 12 is a memory used as a working memory or the like of the processor 11.

The ROM 13 is a memory that stores various programs to be executed by the processor 11.

The HDD 14 is, for example, a magnetic disk device for storing various kinds of data. Here, the various kinds of data includes image data read by the image reading unit 16. The various kinds of data also includes image data used for image formation in the image forming unit 17.

The operation panel 15 is, for example, a touch panel that displays various kinds of information and receives operation input from a user. In this case, the operation panel 15 includes a display and a position detection sheet. The display displays various kinds of information. The position detection sheet detects a position indicated by an indication means such as a finger or a stylus pen. Alternatively, the operation panel 15 may be a display and a keyboard instead of the touch panel.

The image reading unit 16 reads an image recorded on a recording medium such as paper. Here, the image reading unit 16 is, for example, a scanner, and a charge coupled device (CCD) method or a contact image sensor (CIS) method may be used. The CCD method is a method in which reflected light of light radiated from a light source to a document is reduced by a lens and received by a CCD. The CIS method is a method in which reflected light of light radiated from an LED light source sequentially to a document is received by a CIS.

The image forming unit 17 forms an image on a recording medium such as paper. Here, the image forming unit 17 is, for example, a printer, and an electrophotographic method or an ink-jet method may be used. The electrophotographic method is a method of forming an image by transferring toner attached to a photoreceptor to a recording medium. The ink-jet method is a method of forming an image by ejecting ink onto a recording medium.

The network I/F 18 transmits and receives various kinds of information to and from another device, for example, the storage server 30 via the communication line 80. Although only one network I/F 18 is illustrated here, it is assumed that there is a plurality of network I/Fs 18.

### Image Processing Apparatus of First and Second Aspects

As described above, the image processing apparatus 10 has a so-called multi-interface configuration including a plurality of network interfaces. Thus, the image processing apparatus 10 is connected to two networks such as the Internet and an intranet. The image processing apparatus 10 can form an image in response to a request from the two networks. Alternatively, the image processing apparatus 10 can transmit scan data obtained by image reading to the two networks.

**In** this way, two or more networks are used together in the multi-interface configuration.

Therefore, in many cases, the most important security requirement is that data should not be exchanged between these networks.

In addition, as a similar security requirement, there is also a requirement in a case where retrieval or transfer of data is instructed from a specific network. As such a security requirement, there is a policy that only data transfer to a network of an instruction source is permitted.

As a stricter security requirement, there is a request to distinguish data held by the image processing apparatus 10 for each network. Here, the data held by the image processing apparatus 10 includes an address book, job history information, and the like.

A technique for satisfying the security requirements described above has been proposed. In this technique, a network available to a user (hereinafter, referred to as an "available network") is set in user information in advance. As a result, the network capable of transferring data is limited for each user.

Here, available network information indicating the available network that can be allocated to the user is as follows. That is, the available network information is assumed to be "no available network" and identification information of a specific network. The network identification information is, for example, Ethernet (R) 1, Ethernet (R) 2, or Wi-Fi (R). Alternatively, Ethernet (R) 3, Wi-Fi (R) 2, or the like may be added to the network identification information. However, when a new user is registered, the available network information is set to "no available network". This is to prevent erroneous transmission due to incorrect setting of the available network.

As described above, from the viewpoint of security, only a machine administrator should be able to set or change an available network. However, in this case, the following problem arises. Although the machine administrator may be a network administrator, the machine administrator will be described below.

First, when a new user is registered, a machine administrator needs to set an available network for each user.

Secondly, a case where a multi-interface function is newly used in an environment in which the image processing apparatus 10 is already used will be considered. In this case, it is necessary to set available networks for all existing users.

Thirdly, a case where a change in the network environment or a change in the image processing apparatus 10 occurs, and the setting of the network is changed will be considered. In this case, it is necessary to change the available networks for all users.

As described above, the work of allocating available networks to users imposes a very heavy burden on the machine administrator. Further, such a burden increases in proportion to the number of users.

Therefore, in the first and second aspects, the image processing apparatus 10 is configured to have information of a group to which a user belongs in user information used for authentication. Note that the group information may be any information as long as it can identify a group to which a plurality of users belongs. For example, the group information may be information of a role used for authentication.

Further, in the first and second aspects, the image processing apparatus 10 is configured to have a matching table between the group information and the available network. The group information is information of a group to which the user in the above user information belongs. The available network is a network available to the user. The image processing apparatus 10 provides the machine administrator with a function of setting the matching table.

As a result, the machine administrator sets the group to which the user belongs and the available network in connection with each other in the matching table.

Thereafter, the user logs in to the image processing apparatus 10. Since the subsequent operations are different between the image processing apparatuses 10 of the first and second aspects, they will be described separately.

**In** the first aspect, the image processing apparatus 10 refers to the matching table and the information of the group to which the user belongs. Then, the image processing apparatus 10 determines an available network using these pieces of information.

**In** the second aspect, the image processing apparatus 10 performs the operation of the first aspect only when the available network information is an initial value. That is, the image processing apparatus 10 performs the operation of the first aspect only when the available network information is "no available network". Therefore, the image processing apparatus 10 first refers to the available network information set for the user.

It is assumed that the available network information is not "no available network". Then, the image processing apparatus 10 determines an available network using the available network information.

On the other hand, it is assumed that the available network information is "no available network". Then, the image processing apparatus 10 refers to the matching table and the information of the group to which the user belongs. Then, the image processing apparatus 10 determines an available network using these pieces of information.

### Image Processing Apparatus of Third Aspect

An initial value when a user is newly registered is considered. If any one of the networks is set to the initial value, data transmission to a network that is not intended by the machine administrator may be permitted.

As noted above, the security requirement is required for the multi-interface configuration. Therefore, when a new user is registered, the initial value is preferably set to "no available network". From the viewpoint of security, it is assumed that only the machine administrator can set or change the available network. That is, a general user cannot change the available network. Although the machine administrator may be a network administrator, the machine administrator will be described below.

As described above, when a new user is registered, the available network information is set to "no available network". However, in this case, the following problem arises.

First, when a new user is registered, the machine administrator needs to set an available network for each user.

Secondly, a case where the multi-interface function is newly used in an environment in which the image processing apparatus 10 is already used will be considered. In this case, it is necessary to set available networks for all existing users.

Thirdly, a case where a change in the network environment or a change in the image processing apparatus 10 occurs, and the setting of the network is changed will be considered. In this case, it is necessary to change the available networks for all users.

These operations impose a very heavy burden on the machine administrator.

Therefore, in the third aspect, the image processing apparatus 10 provides the machine administrator with the network setting function in the case of "no available network".

As a result, the machine administrator performs network setting in the case of "no available network". For example, the machine administrator sets Ethernet1 as the network setting in the case of "no available network".

Thereafter, the user logs in to the image processing apparatus 10. Then, the image processing apparatus 10 determines an available network based on the available network information and the network setting. For example, it is assumed that the available network information of the user is "no available network". In this case, the image processing apparatus 10 determines an available network in accordance with the network setting in the case of "no available network". Further, it is assumed that the available network information of the user is other than "no available network". In this case, the image processing apparatus 10 determines an available network according to the available network information.

### Specific Example of Processing of Image Processing Apparatus

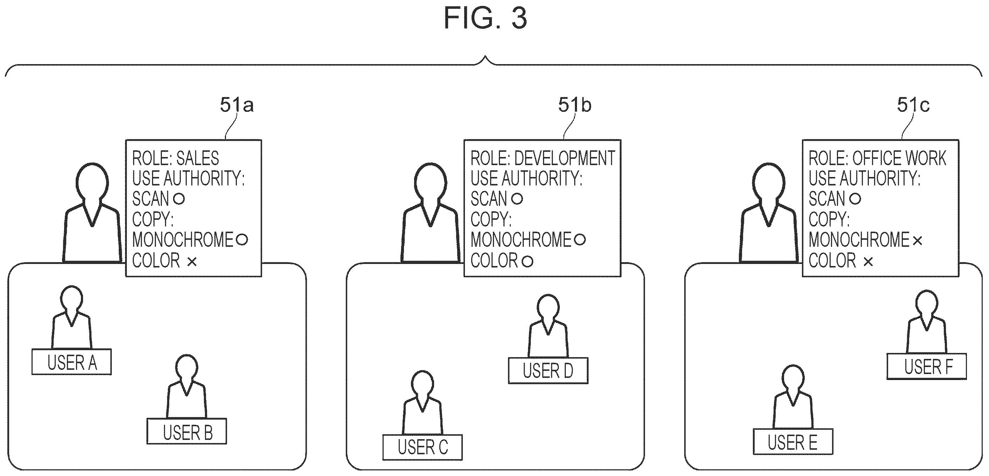

Fig. 3 to Fig. 7 are diagrams each illustrating a specific example of processing of the image processing apparatus 10 according to the first exemplary embodiment. Note that in the following description, a role is taken as an example of a group. Further, Ethernet1, Ethernet2, and Wi-Fi will be described as examples of available networks.

First, in the image processing apparatus 10, a role for which use authority is set is created. The role is a job role. The use authority may be related to an application, color, monochrome, or the like. By assigning a role to each user, it becomes easy to set the use authority.

Fig. 3 is a diagram schematically illustrating an example of a role. In Fig. 3, the role is one of sales, development, and office work. It is assumed that the role of users A and B is sales, the role of users C and D is development, and the role of users E and F is office work. The use authority includes information as to whether scanning is possible and information as to whether copying is possible in monochrome or in color.

For example, role information 51a is information on the role "sales". The role information 51a includes information indicating that scanning and monochrome copying can be performed but color copying cannot be performed as the use authority.

Role information 51b is information on the role "development". The role information 51b includes information indicating that all of scanning, monochrome copying, and color copying can be performed as the use authority.

Further, role information 51c is information on the role "office work". The role information 51c includes information indicating that scanning can be performed but neither monochrome copying nor color copying can be performed as the use authority.

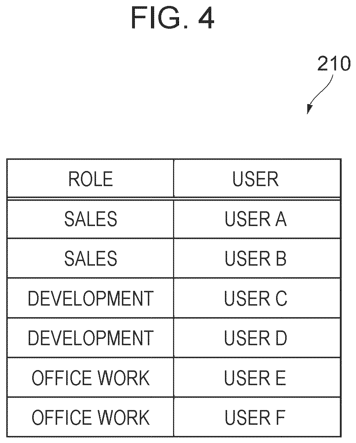

Fig. 4 is a diagram illustrating an example of user information 210 when the role as illustrated in Fig. 3 is set. In the user information 210, a role is assigned to each user. Here, the role "sales" is assigned to the users A and B. The role "development" is assigned to the users C and D. The role "office work" is assigned to the users E and F.

Next, matching between the role and the available network is performed. At this time, matching with an available network is performed not for each user but for each role.

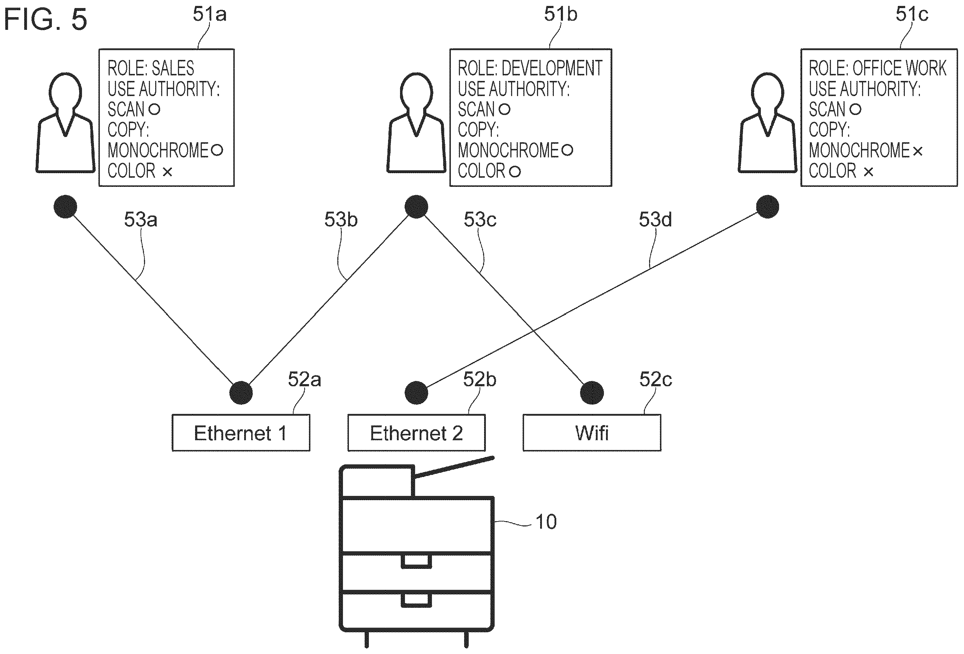

Fig. 5 is a diagram schematically illustrating an example of matching between a role and an available network.

In Fig. 5, the role information 51a and network information 52a are associated with each other by a connection line 53a. This indicates that the available network of the user having the role "sales" is Ethernet1.

Further, the role information 51b and the network information 52a and network information 52c are associated with each other by connection lines 53b and 53c, respectively. This indicates that the available networks of the user having the role "development" are Ethernet1 and Wi-Fi.

Furthermore, the role information 51c and network information 52b are associated with each other by a connection line 53d. This indicates that the available network of the user having the role "office work" is Ethernet2.

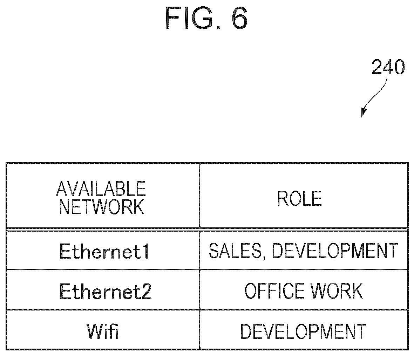

Fig. 6 is a diagram illustrating an example of a matching table 240 representing matching between a role and an available network as illustrated in Fig. 5. What is important here is that the matching between the role and the available network is not held in one of the authorities in the role information 51a to 51c but is held in the matching table 240. That is, in the present exemplary embodiment, the relationship between the user information 210 of Fig. 4 and the matching table 240 of Fig. 6 is sparse. This makes it possible to flexibly cope with changes in the network environment.

The available network for the user is then determined. Specifically, this determination is made by combining the user information 210 of Fig. 4 and the matching table 240 of Fig. 6.

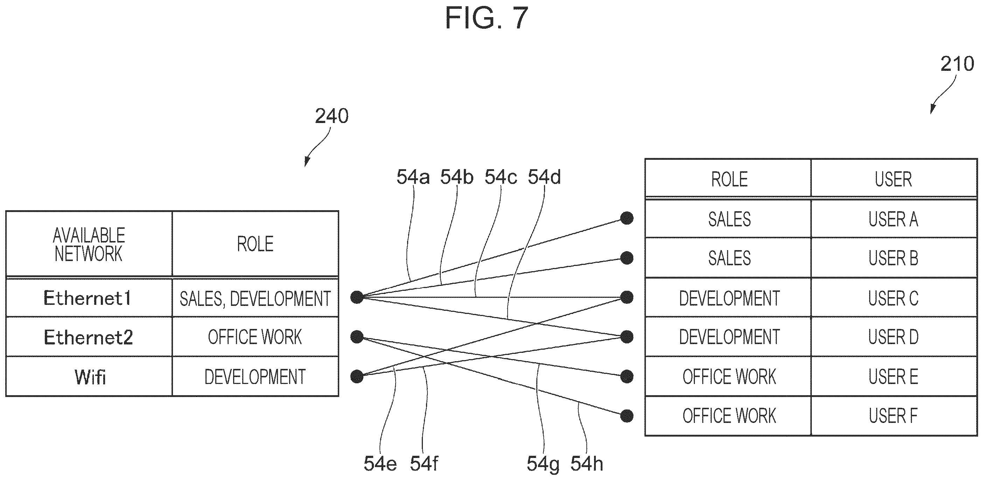

Fig. 7 is a diagram schematically illustrating an example of such determination.

For example, attention is paid to the role "sales" associated with the users A and B in the user information 210. The role "sales" is associated with the role "sales, development" of the matching table 240 by connection lines 54a and 54b. In the matching table 240, the role "sales, development" is associated with the available network "Ethernet1". Therefore, the available network of the users A and B is Ethernet1.

Further, attention is paid to the role "development" associated with the users C and D in the user information 210. The role "development" is associated with the role "sales, development" of the matching table 240 by connection lines 54c and 54d. In the matching table 240, the role "sales, development" is associated with the available network "Ethernet1". Further, the role "development" is also associated with the role "development" of the matching table 240 by connection lines 54e and 54f. In the matching table 240, the role "development" is associated with the available network "Wi-Fi". Therefore, the available networks of the users C and D are Ethernet1 and Wi-Fi.

Furthermore, attention is paid to the role "office work" associated with the users E and F in the user information 210. The role "office work" is associated with the role "office work" of the matching table 240 by connection lines 54g and 54h. In the matching table 240, the role "office work" is associated with the available network "Ethernet2". Therefore, the available network of the users E and F is Ethernet2.

**In** a case where such a configuration is adopted, it is assumed that the network used by each role changes due to a change in the network environment. Even in such a case, it is not necessary to change the setting of the role itself. That is, only the matching table 240 between the role and the available network needs to be modified.

Note that there may be a case where there is no group divided by authority, such as a role. For example, it is a case where there are only groups divided by identification information such as "department name". Even in such a case, the available network information can be collectively set by using the matching table.

### Functional Configuration of Image Processing Apparatus

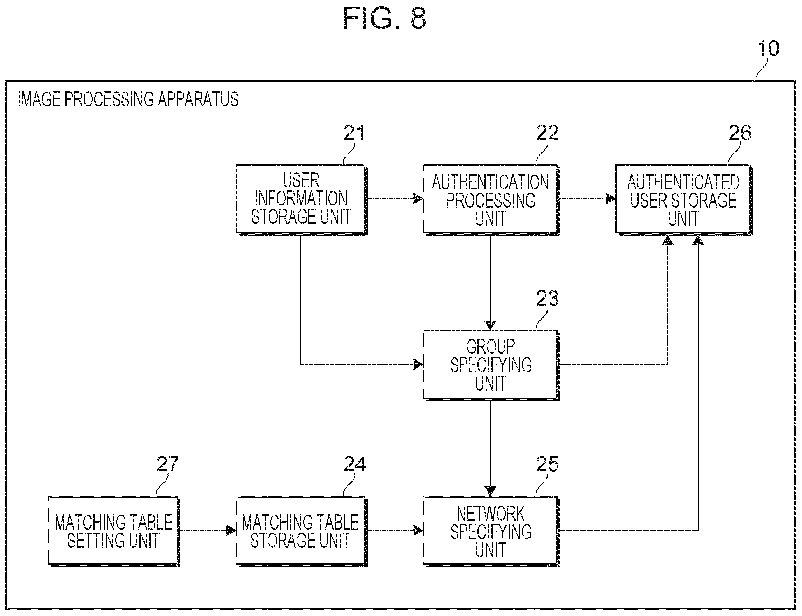

Fig. 8 is a block diagram illustrating a functional configuration example of the image processing apparatus 10 according to the first exemplary embodiment. As illustrated, the image processing apparatus 10 includes a user information storage unit 21, an authentication processing unit 22, and a group specifying unit 23. The image processing apparatus 10 further includes a matching table storage unit 24 and a network specifying unit 25. The image processing apparatus 10 further includes an authenticated user storage unit 26 and a matching table setting unit 27.

The user information storage unit 21 stores user information.

As described above, the user information is information in which a plurality of users is associated with groups to which the respective users belong. Here, a group is a set of users obtained by dividing a plurality of users according to a role assigned to each of the plurality of users. The user information is an example of first association information in which each of a plurality of users is associated with a corresponding one of a plurality of groups.

Further, in the second and third aspects, the user information includes available network information. As described above, the available network information is either "no available network" or identification information of a specific network. However, the available network information is not shown in the user information 210 of Fig. 4 and Fig. 7.

The authentication processing unit 22 authenticates a user who has attempted to log in to the image processing apparatus 10. The authentication processing unit 22 may authenticate a user using the user information stored in the user information storage unit 21. Then, the authentication processing unit 22 stores information about the user who has been successfully authenticated in the authenticated user storage unit 26. The login to the image processing apparatus 10 by the user is an example of a request to use the information processing system by a user.

Further, in the second aspect, the authentication processing unit 22 refers to the available network information included in the user information after the authentication. Then, the authentication processing unit 22 determines whether or not the available network information is "no available network". Here, it is assumed that the available network information is determined not to be "no available network". Then, the authentication processing unit 22 specifies an available network by using the available network information. Then, the authentication processing unit 22 stores the available network in the authenticated user storage unit 26. At this time, the authentication processing unit 22 stores the available network in association with information about the user who has been successfully authenticated. This processing of the authentication processing unit 22 is an example of specifying, in response to the request to use the information processing system by a user, when a specific network among the plurality of networks is associated with the user, the specific network as a network available to the user.

Furthermore, also in the third aspect, the authentication processing unit 22 refers to the available network information included in the user information after the authentication. Then, the authentication processing unit 22 determines whether or not the available network information is "no available network".

Here, it is assumed that the available network information is determined not to be "no available network". Then, the authentication processing unit 22 specifies an available network by using the available network information. Then, the authentication processing unit 22 stores the available network in the authenticated user storage unit 26. At this time, the authentication processing unit 22 stores the available network in association with information about the user who has been successfully authenticated. This processing of the authentication processing unit 22 is an example of specifying, in response to the request to use the information processing system by a user, when a specific network among the plurality of networks is associated with the user, the specific network as a network available to the user.

On the other hand, it is assumed that the available network information is determined to be "no available network". Then, the authentication processing unit 22 determines whether or not there is a network setting when the available network information is "no available network". As the network setting, identification information of a predetermined network may be stored in a storage unit (not illustrated). For example, the machine administrator may store identification information of a predetermined network as the network setting. When there is the network setting, the authentication processing unit 22 specifies an available network by using the network setting. Then, the authentication processing unit 22 stores the available network in the authenticated user storage unit 26. At this time, the authentication processing unit 22 stores the available network in association with information about the user who has been successfully authenticated. The available network information being "no available network" is an example of none of the plurality of networks being associated with the user. Further, the network set in the network setting when the available network information is "no available network" is an example of the predetermined network. Furthermore, this processing of the authentication processing unit 22 is an example of specifying, in response to the request to use the information processing system by a user, a predetermined network as a network available to the user when none of the plurality of networks is associated with the user.

The group specifying unit 23 specifies a group corresponding to a user. Here, the user is a user authenticated by the authentication processing unit 22. The group is a group associated with the user by the user information stored in the user information storage unit 21. This processing of the group specifying unit 23 is an example of specifying, in response to the request to use the information processing system by a user, a group associated with the user by the first association information.

**In** the second aspect, the group specifying unit 23 specifies a group corresponding to a user when a condition is satisfied. Here, the condition is a condition that the available network information is "no available network". Whether or not this condition is satisfied is determined by the authentication processing unit 22. This processing of the group specifying unit 23 is an example of specifying, in response to the request to use the information processing system by a user, a group associated with the user by the first association information when none of the plurality of networks is associated with the user.

Further, in the third aspect, when both of two conditions are satisfied, the group specifying unit 23 specifies the group corresponding to the user. Here, one of the two conditions is a condition that the available network information is "no available network". The other of the two conditions is a condition that there is no network setting when the available network information is "no available network". Whether or not these conditions are satisfied is determined by the authentication processing unit 22.

The matching table storage unit 24 stores a matching table. As described above, the matching table is information in which a plurality of groups and available networks of users belonging to the respective groups are associated with each other. The matching table is stored as information different from the user information. The matching table is an example of second association information in which each of a plurality of groups is associated with a corresponding one of a plurality of networks. Additionally, the matching table is an example of the second association information separated from the first association information.

The network specifying unit 25 specifies an available network corresponding to a group. Here, the group is a group specified by the group specifying unit 23. The available network is an available network associated with this group in the matching table. Then, the network specifying unit 25 stores the available network in the authenticated user storage unit 26. At this time, the network specifying unit 25 stores the available network in association with information about the user who has been successfully authenticated. This processing of the network specifying unit 25 is an example of specifying, when a group is specified, a network associated with the group by the second association information among a plurality of networks connected to the information processing system as a network available to the user.

**In** the second aspect, the network specifying unit 25 specifies an available network corresponding to a group when a condition is satisfied. Here, the condition is a condition that the available network information is "no available network". Whether or not this condition is satisfied is determined by the authentication processing unit 22. Then, the network specifying unit 25 stores the available network in the authenticated user storage unit 26. At this time, the network specifying unit 25 stores the available network in association with information about the user who has been successfully authenticated. This processing of the network specifying unit 25 is an example of specifying, in response to the request to use the information processing system by a user, when none of the plurality of networks is associated with the user, a network associated with the group by the second association information as the network available to the user.

Further, in the third aspect, the network specifying unit 25 specifies the available network corresponding to the group when both of the two conditions are satisfied. Here, one of the two conditions is a condition that the available network information is "no available network". The other of the two conditions is a condition that there is no network setting when the available network information is "no available network". Whether or not these conditions are satisfied is determined by the authentication processing unit 22. Then, the network specifying unit 25 stores the available network in the authenticated user storage unit 26. At this time, the network specifying unit 25 stores the available network in association with information about the user who has been successfully authenticated.

The authenticated user storage unit 26 stores information about a user who has been successfully authenticated. The authenticated user storage unit 26 also stores an available network of the user who has been successfully authenticated. Here, the information about the user who has been successfully authenticated is information obtained by the authentication of the authentication processing unit 22. The available network may be specified by the network specifying unit 25.

**In** the second aspect, the available network may also be specified by the authentication processing unit 22. Specifically, it is assumed that the authentication processing unit 22 determines that the available network information is not "no available network". In this case, the available network is specified by the authentication processing unit 22 using the available network information included in the user information.

Further, also in the third aspect, the available network may be specified by the authentication processing unit 22. Specifically, it is assumed that the authentication processing unit 22 determines that the available network information is not "no available network". In this case, the available network is specified by the authentication processing unit 22 using the available network information included in the user information. It is assumed that the authentication processing unit 22 determines that the available network information is "no available network". Then, it is assumed that the authentication processing unit 22 determines that there is a network setting when the available network information is "no available network". In this case, the available network is specified by the authentication processing unit 22 by using the network setting.

The matching table setting unit 27 sets a matching table in the matching table storage unit 24. Specifically, it is assumed that the machine administrator makes a request to set a matching table that specifies a group and an available network. Then, the matching table setting unit 27 sets a matching table in which the specified group is connected with the available network. The processing of the matching table setting unit 27 is an example of creating the second association information in which a plurality of groups is associated with the plurality of networks in response to a request to create the second association information.

### Operation of Image Processing Apparatus

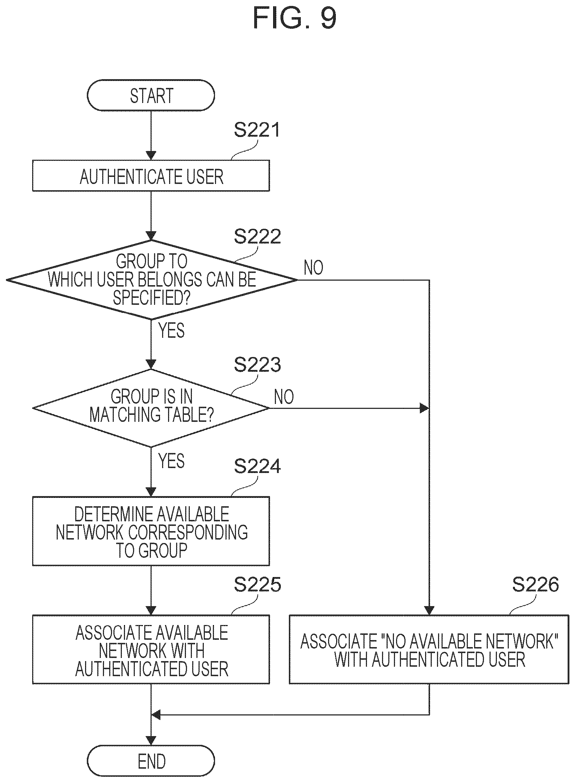

Fig. 9 is a flowchart illustrating an operation example of the image processing apparatus 10 of the first aspect. Note that when a user attempts to log in to the image processing apparatus 10, the operation of this flowchart starts.

First, the authentication processing unit 22 authenticates a user who has attempted to log in (step 221). As a result, information about the authenticated user is stored in the authenticated user storage unit 26. Note that in this flowchart, an operation performed when the authentication by the authentication processing unit 22 fails is omitted.

Next, the group specifying unit 23 determines whether or not a group to which the user belongs can be specified (step 222). Specifically, the group specifying unit 23 makes such a determination by referring to the user information stored in the user information storage unit 21.

Assume that it is determined in step 222 that the group to which the user belongs can be specified. Then, the network specifying unit 25 determines whether or not the group exists in the matching table (step 223). Specifically, the network specifying unit 25 makes such a determination by referring to the matching table stored in the matching table storage unit 24.

Assume that it is determined in step 223 that the group exists in the matching table. Then, the network specifying unit 25 determines an available network corresponding to the group (step 224). Specifically, the network specifying unit 25 makes such a determination by referring to the matching table stored in the matching table storage unit 24.

Thereafter, the network specifying unit 25 associates an available network with the authenticated user (step 225). Specifically, the network specifying unit 25 associates an available network with an authenticated user in the authenticated user storage unit 26. Here, the authenticated user is a user authenticated in step 221. The available network is a network determined as the available network in step 224. In this state, it is assumed that the user instructs transmission of data read by the image reading unit 16 of the image processing apparatus 10. Then, the read data is transmitted to the available network associated with the user.

On the other hand, assume that it is determined in step 222 that the group to which the user belongs cannot be specified. In this case, the group specifying unit 23 associates "no available network" with the authenticated user (step 226). Alternatively, assume that it is determined in step 223 that the group does not exist in the matching table. In this case, the network specifying unit 25 associates "no available network" with the authenticated user (step 226). Here, the authenticated user is a user authenticated in step 221. In this state, it is assumed that the user instructs transmission of data read by the image reading unit 16 of the image processing apparatus 10. Then, the read data is not transmitted to the network.

**In** the first aspect, the available network of a user can be set by the unit of group to which the user belongs. Therefore, it is possible to reduce a load for the setting of the available network.

Further, in the first aspect, the authority or the attribute of the group is not provided with the available network information. A matching table between a group and an available network is provided. This makes it easy to cope with a change in available network due to replacement of machines or a change in network environment.

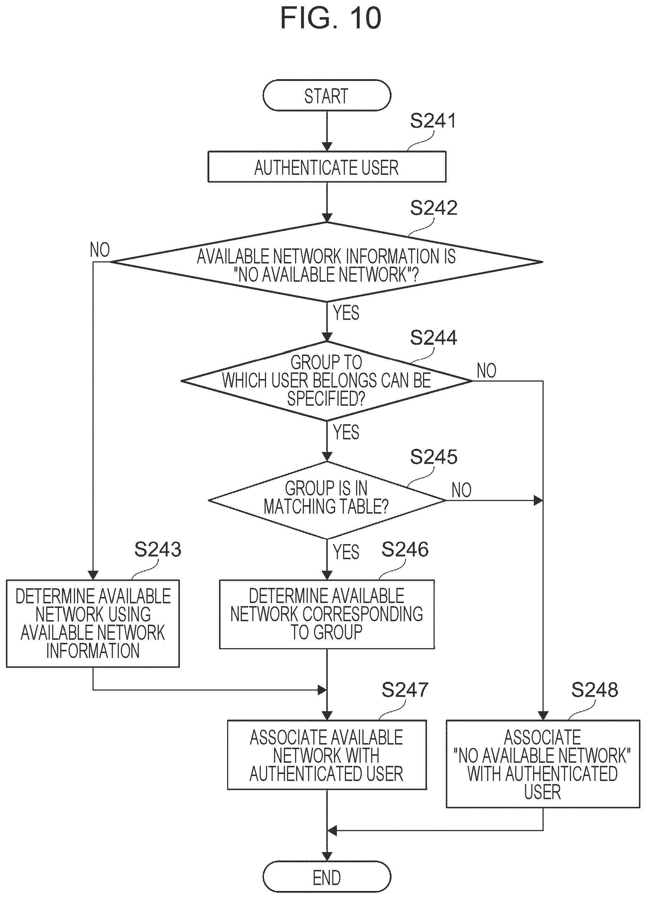

Fig. 10 is a flowchart illustrating an operation example of the image processing apparatus 10 of the second aspect. Note that when a user attempts to log in to the image processing apparatus 10, the operation of this flowchart starts.

First, the authentication processing unit 22 authenticates a user who has attempted to log in (step 241). As a result, information about the authenticated user is stored in the authenticated user storage unit 26. Note that also in this flowchart, the operation performed when the authentication by the authentication processing unit 22 fails is omitted.

Next, the authentication processing unit 22 determines whether or not the available network information is "no available network" (step 242). Here, the available network information is information stored in the user information storage unit 21.

Assume that it is determined in step 242 that the available network information is not "no available network". Then, the authentication processing unit 22 determines an available network using the available network information (step 243).

On the other hand, assume that it is determined in step 242 that the available network information is "no available network". Then, the image processing apparatus 10 performs the processing of steps 244 to 248. Since the processing of steps 244 to 248 are the same as the processing of steps 222 to 226 of Fig. 9, the description thereof will be omitted.

**In** the second aspect, data can be transmitted even when the available network information of the user is "no available network". In other words, data can be transmitted even when the available network information of the user is the initial value at the time of user registration. Then, the machine administrator can manage the transmission destination.

In the second aspect, when an available network is set for the user, the available network is prioritized. As a result, the degree of freedom of setting is generated as follows. That is, basically, an available network may be set for each group. However, for a specific user, it is possible to make network setting different from the available network of the group to which the user belongs.

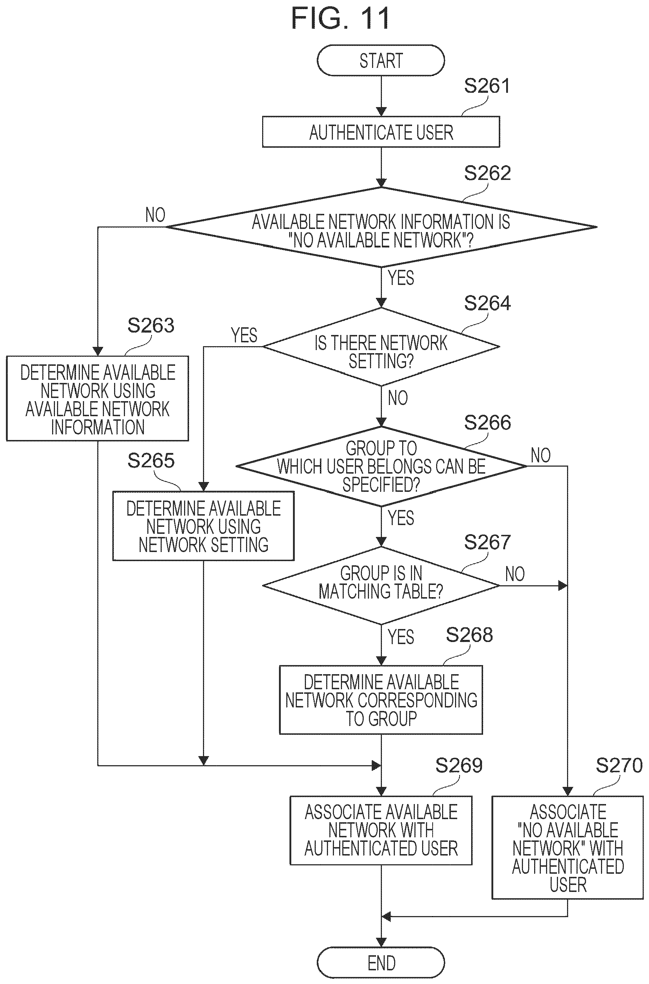

Fig. 11 is a flowchart illustrating an operation example of the image processing apparatus 10 of the third aspect. Note that when a user attempts to log in to the image processing apparatus 10, the operation of this flowchart starts.

First, the authentication processing unit 22 authenticates a user who has attempted to log in (step 261). As a result, information about the authenticated user is stored in the authenticated user storage unit 26. Note that also in this flowchart, the operation performed when the authentication by the authentication processing unit 22 fails is omitted.

Next, the authentication processing unit 22 determines whether or not the available network information is "no available network" (step 262). Here, the available network information is information stored in the user information storage unit 21.

Assume that it is determined in step 262 that the available network information is not "no available network". Then, the authentication processing unit 22 determines an available network using the available network information (step 263).

On the other hand, assume that it is determined in step 262 that the available network information is "no available network". Then, the authentication processing unit 22 determines whether or not there is a network setting (step 264). Here, the network setting is a network setting when the available network information is "no available network".

Assume that it is determined in step 264 that there is a network setting. Then, the authentication processing unit 22 determines an available network by using the network setting (step 265).

On the other hand, assume that it is determined in step 264 that there is no network setting. Then, the image processing apparatus 10 performs the processing of steps 266 to 270. Since the processing of steps 266 to 270 are the same as the processing of steps 222 to 226 of Fig. 9, the description thereof will be omitted.

Note that in this operation example, when it is determined in step 264 that there is no network setting, the image processing apparatus 10 performs the processing of steps 266 to 270. However, when it is determined in step 264 that there is no network setting, the authentication processing unit 22 may associate "no available network" with the authenticated user.

**In** the third aspect, data can be transmitted even when the available network information of the user is "no available network". Then, the machine administrator can manage the transmission destination.

In the third aspect, the available network information of all the users may not be changed. For example, it is assumed that the available network is Ethernet1 for 90% of the users and Ethernet2 for 10% of the users. In this case, the available network information of 90% of the users may be set to "no available network". Then, the network setting when the available network information is "no available network" may be set to Ethernet1. In other words, a setting may be made such that "no available network" of 90% of the users is read as Ethernet1 being available. On the other hand, only the available network information of the remaining 10% of the users may be individually set to Ethernet2. Thus, the number of settings of the available network information is reduced as compared with a case where the available network information is individually set for all the users.

### Second Exemplary Embodiment

### Overall Configuration of Image Processing System

**In** the second exemplary embodiment, the user information 210 is stored not in the image processing apparatus 10 but in an external server. Even in this case, the available network can be set without editing the contents of the user information. In particular, in the second exemplary embodiment, the matching table 240 can be edited according to the environment of each image processing apparatus 10. Accordingly, it is possible to set an appropriate available network according to the environment of each image processing apparatus 10. For example, the plurality of image processing apparatuses 10 may be located at different sites or on different floors. In such a case, it is possible to set an available network in consideration of a physical network situation of each site or floor.

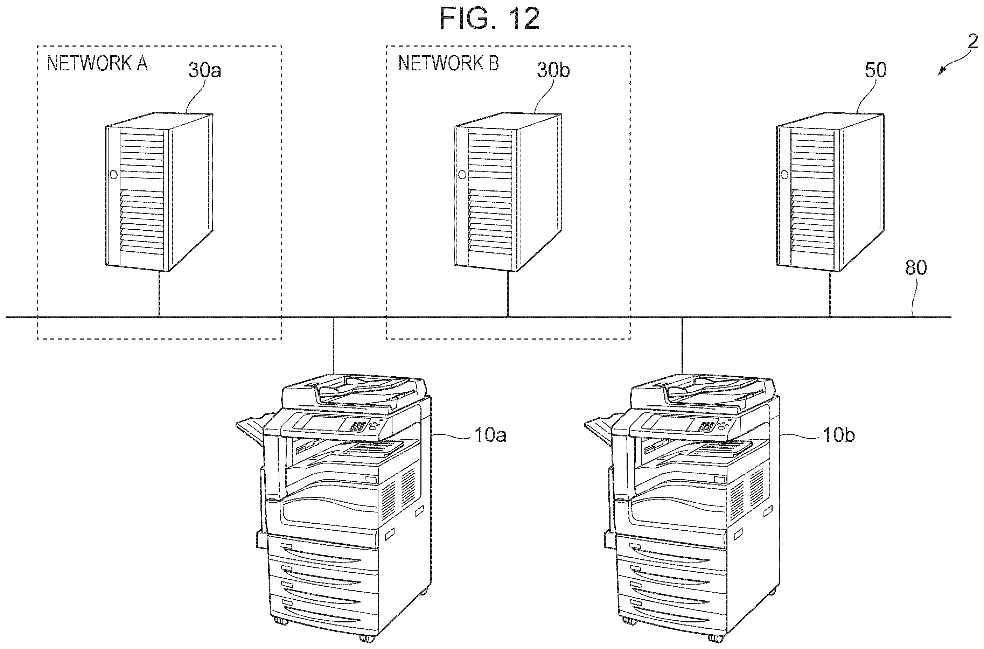

Fig. 12 is a diagram illustrating an overall configuration example of an image processing system 2 according to the second exemplary embodiment. As illustrated, the image processing system 2 includes image processing apparatuses 10a and 10b and the storage servers 30a and 30b. The image processing system 2 further includes a user information server 50. The image processing apparatuses 10a and 10b, the storage servers 30a and 30b, and the user information server 50 are connected via the communication line 80. As illustrated, the storage servers 30a and 30b exist in the networks A and B, respectively.

Each of the image processing apparatuses 10a and 10b is the same as the image processing apparatus 10 described with reference to Fig. 1, and thus description thereof will be omitted. Note that although the image processing apparatuses 10a and 10b are illustrated in Fig. 12, they may also be referred to as the image processing apparatus 10 when they are not distinguished from each other. Although only two image processing apparatuses 10 are illustrated in Fig. 12, three or more image processing apparatuses 10 may be provided.

Since the storage servers 30a and 30b are the same as those described with reference to Fig. 1, the description thereof will be omitted.

The user information server 50 is an example of the external server described above. The user information server 50 provides user information to the image processing apparatus 10 from the outside. The user information server 50 may be, for example, an Active Directory (AD) server.

The communication line 80 is a line used for information communication between the image processing apparatus 10, the storage server 30, and the user information server 50. As the communication line 80, for example, the Internet or a local area network (LAN) may be used. Hardware Configuration of Image Processing Apparatus

The image processing apparatus 10 according to the second exemplary embodiment has the same hardware configuration as that of Fig. 2.

### Specific Example of Image Processing System

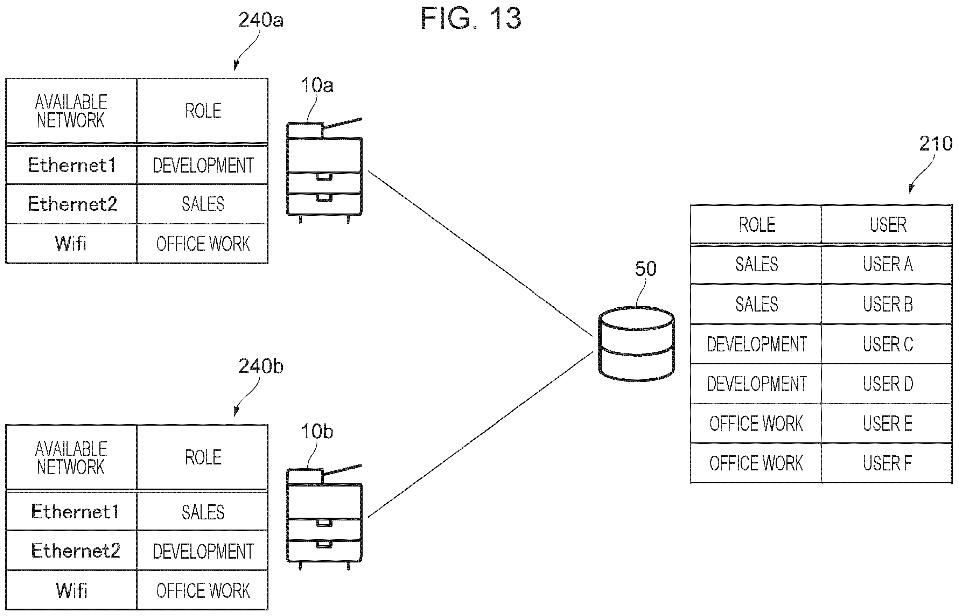

Fig. 13 is a diagram illustrating a specific example of the image processing system 2 according to the second exemplary embodiment. Note that in the following description, a role is taken as an example of a group. Further, Ethernet1, Ethernet2, and Wi-Fi will be described as examples of available networks.

**In** the image processing system 2 according to the second exemplary embodiment, the image processing apparatuses 10a and 10b refer to the same user information 210. That is, the image processing apparatuses 10a and 10b refer to the user information 210 held by the user information server 50. On the other hand, the image processing apparatuses 10a and 10b refer to different matching tables 240a and 240b. To be specific, the image processing apparatus 10a refers to the matching table 240a. The image processing apparatus 10b refers to the matching table 240b. Here, in the matching tables 240a and 240b, the available networks assigned to the role "sales" and the role "development" are different.

Note that in the above description, the role is taken as an example of the group, but the group is not limited thereto. Any information may be used as long as the information divides a plurality of users as a group. For example, an arbitrary item indicating a group among the items of the user information held by the AD server may be used.

**In** this case, the user information 210 is an example of the first association information that is one piece of association information in which each of a plurality of users and a corresponding one of a plurality of groups are associated with each other by one association method.

Further, the matching tables 240a and 240b are examples of a plurality of pieces of association information in which each of a plurality of groups and a corresponding one of a plurality of networks are associated with each other by a plurality of association methods.

Furthermore, each of the matching tables 240a and 240b is an example of the second association information that is one piece of association information selected from the plurality of pieces of association information. Each of the matching tables 240a and 240b is an example of the second association information, which is one piece of association information selected from the plurality of pieces of association information in accordance with an information processing apparatus that has received a request for use by a user.

### Functional Configuration of Image Processing Apparatus

The image processing apparatus 10 according to the second exemplary embodiment has substantially the same functional configuration as that in Fig. 8. Specifically, the image processing apparatus 10 according to the second exemplary embodiment includes a user information acquisition unit instead of the user information storage unit 21. The user information acquisition unit acquires user information from the user information server 50.

### Operation of Image Processing Apparatus

The image processing apparatus 10 according to the second exemplary embodiment performs substantially the same operations as those in Fig. 9 to Fig. 11. Specifically, the user information referred to by the image processing apparatus 10 according to the second exemplary embodiment is not stored in the user information storage unit 21. The user information referred to by the image processing apparatus 10 according to the second exemplary embodiment is acquired from the user information server 50 by the user information acquisition unit.

**In** the second exemplary embodiment, the group information does not directly include the available network information. A matching table between a group and an available network is provided. Thus, it is possible to realize the setting of the available network depending on the environment of each image processing apparatus 10.

### Processor

**In** the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

### Program

The processing performed by the image processing apparatus 10 according to the present exemplary embodiment is prepared as, for example, a program such as application software.

In this case, the program for realizing the present exemplary embodiment is regarded as a program for causing a computer to realize a function of specifying, in response to a request to use an information processing system by a user, a group associated with the user by the first association information, and a function of specifying, when the group is specified, a network associated with the group by the second association information separated from the first association information among a plurality of networks connected to the information processing system as a network available to the user.

Note that the program for realizing the present exemplary embodiment can be provided not only by a communication means but also by being stored in a recording medium such as a CD-ROM.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims.

## Claims

1. An information processing system (10, 10a, 10b) comprising:
one or more processors (11) configured to:
in response to a request to use the information processing system by a user (USER A~F), specify a group (51a, 51b, 51c) associated with the user by first association information (210); and
when the group is specified, specify a network (NETWORK A~B, 52a, 52b, 52c) associated with the group by second association information (240) separated from the first association information among a plurality of networks connected to the information processing system as a network available to the user; the information processing system (10, 10a, 10b) being **characterized in that** the one or more processors (11) are further configured to:
in response to a request to use the information processing system by the user, when none of the plurality of networks is associated with the user, specify a predetermined network as a network available to the user, wherein the predetermined network is stored in a storage unit by an administrator.

2. The information processing system (10, 10a, 10b) according to claim 1, wherein the first association information is association information in which each of a plurality of users is associated with a corresponding one of a plurality of groups.

3. The information processing system (10, 10a, 10b) according to claim 1, wherein the second association information is association information in which each of a plurality of groups is associated with a corresponding one of the plurality of networks.

4. The information processing system (10, 10a, 10b) according to any one of claims 1 to 3, wherein the group is a set of users obtained by dividing a plurality of users according to a role assigned to each of the plurality of users.

5. The information processing system (10, 10a, 10b) according to any one of claims 1 to 4, wherein the one or more processors are configured to:
in response to a request to use the information processing system by the user, when none of the plurality of networks is associated with the user, specify a group associated with the user by the first association information; and
specify a network associated with the group by the second association information as a network available to the user.

6. The information processing system (10, 10a, 10b) according to claim 5, wherein the one or more processors are configured to
in response to a request to use the information processing system by the user, when a specific network among the plurality of networks is associated with the user, specify the specific network as a network available to the user.

7. The information processing system (10, 10a, 10b) according to any one of claims 1 to 6, wherein
the first association information is one piece of association information in which each of a plurality of users is associated with a corresponding one of a plurality of groups by one association method, and
the second association information is one piece of association information selected from a plurality of pieces of association information in which each of a plurality of groups is associated with a corresponding one of the plurality of networks by a plurality of association methods.

8. The information processing system according to claim7, wherein the second association information is one piece of association information selected from the plurality of pieces of association information in accordance with an information processing apparatus that has received a request for use by the user.

9. The information processing system (10, 10a, 10b) according to any one of claims 1 to 9, wherein the one or more processors are configured to
in response to a request to create the second association information, create the second association information in which a plurality of groups is associated with the plurality of networks.

10. A program causing a computer to execute a process comprising:
specifying, in response to a request to use an information processing system (10, 10a, 10b) by a user(USER A~F), a group (51a, 51b, 51c) associated with the user by first association information (210);
specifying, when the group is specified, a network (NETWORK A~B, 52a, 52b, 52c) associated with the group by second association information (240) separated from the first association information among a plurality of networks connected to the information processing system as a network available to the user; the program being **characterized in that** the process further comprises:
in response to a request to use the information processing system by the user, when none of the plurality of networks is associated with the user, specifying a predetermined network as a network available to the user, wherein the predetermined network is stored in a storage unit by an administrator.

## Patentansprüche

1. Informationsverarbeitungssystem (10, 10a, 10b), umfassend:
einen oder mehrere Prozessoren (11), die dazu konfiguriert sind:
als Reaktion auf eine Anforderung eines Benutzers (USER A~F) das Informationsverarbeitungssystem zu verwenden, eine Gruppe (51a, 51b, 51c) zu bestimmen, die dem Benutzer durch eine erste Zuordnungsinformation (210) zugeordnet ist; und
wenn die Gruppe bestimmt ist, unter einer Vielzahl von Netzwerken, die mit dem Informationsverarbeitungssystem verbunden sind, ein Netzwerk (NETWORK A~B, 52a, 52b, 52c), das der Gruppe durch eine von der ersten Zuordnungsinformation getrennte zweite Zuordnungsinformation (240) zugeordnet ist, als ein für den Benutzer verfügbares Netzwerk zu bestimmen; wobei das Informationsverarbeitungssystem (10, 10a, 10b) **dadurch gekennzeichnet ist, dass** der eine oder die mehreren Prozessoren (11) ferner dazu konfiguriert sind:
als Reaktion auf eine Anforderung des Benutzers, das Informationsverarbeitungssystem zu verwenden, wenn keines der Vielzahl von Netzwerken dem Benutzer zugeordnet ist, ein vorgegebenes Netzwerk als ein für den Benutzer verfügbares Netzwerk zu bestimmen, wobei das vorgegebene Netzwerk von einem Administrator in einer Speichereinheit gespeichert ist.

2. Informationsverarbeitungssystem (10, 10a, 10b) nach Anspruch 1, wobei die erste Zuordnungsinformation eine Zuordnungsinformation ist, in der jeder Benutzer aus einer Vielzahl von Benutzern einer entsprechenden Gruppe aus einer Vielzahl von Gruppen zugeordnet ist.

3. Informationsverarbeitungssystem (10, 10a, 10b) nach Anspruch 1, wobei die zweite Zuordnungsinformation eine Zuordnungsinformation ist, in der jede Gruppe aus einer Vielzahl von Gruppen einem entsprechenden Netzwerk aus der Vielzahl von Netzwerken zugeordnet ist.

4. Informationsverarbeitungssystem (10, 10a, 10b) nach einem der Ansprüche 1 bis 3, wobei die Gruppe eine Menge von Benutzern ist, die durch Unterteilung einer Vielzahl von Benutzern gemäß einer Rolle erhalten wird, die jedem der Vielzahl von Benutzern zugewiesen ist.

5. Informationsverarbeitungssystem (10, 10a, 10b) nach einem der Ansprüche 1 bis 4, wobei der eine oder die mehreren Prozessoren dazu konfiguriert sind:
als Reaktion auf eine Anforderung des Benutzers, das Informationsverarbeitungssystem zu verwenden, wenn keines der Netzwerke aus der Vielzahl von Netzwerken dem Benutzer zugeordnet ist, eine Gruppe zu bestimmen, die dem Benutzer durch die erste Zuordnungsinformation zugeordnet ist; und
ein Netzwerk, das der Gruppe durch die zweite Zuordnungsinformation zugeordnet ist, als ein für den Benutzer verfügbares Netzwerk zu bestimmen.

6. Informationsverarbeitungssystem (10, 10a, 10b) nach Anspruch 5, wobei der eine oder die mehreren Prozessoren dazu konfiguriert sind,
als Reaktion auf eine Anforderung des Benutzers, das Informationsverarbeitungssystem zu verwenden, wenn ein bestimmtes Netzwerk aus der Vielzahl von Netzwerken dem Benutzer zugeordnet ist, das bestimmte Netzwerk als ein für den Benutzer verfügbares Netzwerk zu bestimmen.

7. Informationsverarbeitungssystem (10, 10a, 10b) nach einem der Ansprüche 1 bis 6, wobei
die erste Zuordnungsinformation eine einzelne Zuordnungsinformation ist, in der jeder Benutzer aus einer Vielzahl von Benutzern durch ein Zuordnungsverfahren einer entsprechenden Gruppe aus einer Vielzahl von Gruppen zugeordnet ist, und
die zweite Zuordnungsinformation eine einzelne Zuordnungsinformation ist, die aus einer Vielzahl einzelner Zuordnungsinformationen ausgewählt ist, in denen jede Gruppe aus einer Vielzahl von Gruppen durch eine Vielzahl von Zuordnungsverfahren einem entsprechenden Netzwerk aus der Vielzahl von Netzwerken zugeordnet ist.

8. Informationsverarbeitungssystem nach Anspruch 7, wobei die zweite Zuordnungsinformation eine einzelne Zuordnungsinformation ist, die aus der Vielzahl einzelner Zuordnungsinformationen in Abhängigkeit von einer Informationsverarbeitungsvorrichtung ausgewählt ist, die eine Anforderung zur Verwendung durch den Benutzer empfangen hat.

9. Informationsverarbeitungssystem (10, 10a, 10b) nach einem der Ansprüche 1 bis 9, wobei der eine oder die mehreren Prozessoren dazu konfiguriert sind,
als Reaktion auf eine Anforderung zur Erstellung der zweiten Zuordnungsinformation die zweite Zuordnungsinformation zu erstellen, in der eine Vielzahl von Gruppen der Vielzahl von Netzwerken zugeordnet ist.

10. Programm, das einen Computer veranlasst, einen Prozess auszuführen, umfassend:
als Reaktion auf eine Anforderung eines Benutzers (USER A~F), ein Informationsverarbeitungssystem (10, 10a, 10b) zu verwenden, Bestimmen einer Gruppe (51a, 51b, 51c), die dem Benutzer durch eine erste Zuordnungsinformation (210) zugeordnet ist;
wenn die Gruppe bestimmt ist, Bestimmen, unter einer Vielzahl von Netzwerken, die mit dem Informationsverarbeitungssystem verbunden sind, eines Netzwerks (NETWORK A~B, 52a, 52b, 52c), das der Gruppe durch eine von der ersten Zuordnungsinformation getrennte zweite Zuordnungsinformation (240) zugeordnet ist, als ein für den Benutzer verfügbares Netzwerk; wobei das Programm **dadurch gekennzeichnet ist, dass** der Prozess ferner umfasst:
als Reaktion auf eine Anforderung des Benutzers, das Informationsverarbeitungssystem zu verwenden, wenn keines der Netzwerke aus der Vielzahl von Netzwerken dem Benutzer zugeordnet ist, Bestimmen eines vorgegebenen Netzwerks als ein für den Benutzer verfügbares Netzwerk, wobei das vorgegebene Netzwerk von einem Administrator in einer Speichereinheit gespeichert ist.

## Revendications

1. Un système (10, 10a, 10b) de traitement d'informations comprenant :
un ou plusieurs processeurs (11) configurés pour :
en réponse à une demande d'utilisation du système de traitement d'informations par un utilisateur (USER A~F), spécifier un groupe (51a, 51b, 51c) associé à l'utilisateur au moyen d'une première information d'association (210) ; et
lorsque le groupe est spécifié, spécifier un réseau (NETWORK A~B, 52a, 52b, 52c) associé au groupe au moyen de deuxièmes informations d'association (240), distinctes des premières informations d'association, parmi une pluralité de réseaux connectés au système de traitement d'informations, en tant que réseau accessible à l'utilisateur ; le système (10, 10a, 10b) de traitement d'informations étant **caractérisé en ce que** lesdits un ou plusieurs processeurs (11) sont en outre configurés pour :
en réponse à une demande d'utilisation du système de traitement d'informations par l'utilisateur, lorsqu'aucun des réseaux de la pluralité n'est associé à l'utilisateur, spécifier un réseau prédéterminé en tant que réseau accessible à l'utilisateur, le réseau prédéterminé étant stocké dans une unité de stockage par un administrateur.

2. Le système (10, 10a, 10b) de traitement d'informations selon la revendication 1, dans lequel les premières informations d'association sont des informations d'association dans lesquelles chaque utilisateur d'une pluralité d'utilisateurs est associé à un groupe correspondant d'une pluralité de groupes.

3. Le système (10, 10a, 10b) de traitement d'informations selon la revendication 1, dans lequel les deuxièmes informations d'association sont des informations d'association dans lesquelles chaque groupe d'une pluralité de groupes est associé à un réseau correspondant de la pluralité de réseaux.

4. Le système (10, 10a, 10b) de traitement d'informations selon l'une quelconque des revendications 1 à 3, dans lequel le groupe est un ensemble d'utilisateurs obtenu en répartissant une pluralité d'utilisateurs en fonction d'un rôle attribué à chacun d'entre eux.

5. Le système (10, 10a, 10b) de traitement d'informations selon l'une quelconque des revendications 1 à 4, dans lequel lesdits un ou plusieurs processeurs sont configurés pour :
en réponse à une demande d'utilisation du système de traitement d'informations par l'utilisateur, lorsqu'aucun des réseaux de la pluralité de réseaux n'est associé à l'utilisateur, spécifier un groupe associé à l'utilisateur par les premières informations d'association ; et
spécifier un réseau associé au groupe par les deuxièmes informations d'association en tant que réseau accessible à l'utilisateur.

6. Le système (10, 10a, 10b) de traitement d'informations selon la revendication 5, dans lequel lesdits un ou plusieurs processeurs sont configurés pour,
en réponse à une demande d'utilisation du système de traitement d'informations par l'utilisateur, lorsqu'un réseau spécifique de la pluralité de réseaux est associé à l'utilisateur, spécifier ce réseau spécifique comme étant un réseau disponible pour l'utilisateur.

7. Le système (10, 10a, 10b) de traitement d'informations selon l'une quelconque des revendications 1 à 6, dans lequel
la première information d'association est une information d'association dans laquelle chaque utilisateur d'une pluralité d'utilisateurs est, par un procédé d'association, associé à un groupe correspondant d'une pluralité de groupes, et
la deuxième information d'association est une information d'association sélectionnée parmi une pluralité d'informations d'association dans lesquelles chaque groupe d'une pluralité de groupes est, par une pluralité de procédés d'association, associé à un réseau correspondant de la pluralité de réseaux.

8. Le système de traitement d'informations selon la revendication 7, dans lequel la deuxième information d'association est une information d'association sélectionnée parmi la pluralité d'informations d'association conformément à un dispositif de traitement d'informations ayant reçu une demande d'utilisation de la part de l'utilisateur.

9. Le système (10, 10a, 10b) de traitement d'informations selon l'une quelconque des revendications 1 à 9, dans lequel lesdits un ou plusieurs processeurs sont configurés pour
en réponse à une demande de création de la deuxième information d'association, créer la deuxième information d'association dans laquelle une pluralité de groupes est associée à la pluralité de réseaux.

10. Un programme amenant un ordinateur à exécuter un processus comprenant :
le fait, en réponse à une demande d'utilisation d'un système (10, 10a, 10b) de traitement d'informations par un utilisateur (USER A~F), de spécifier un groupe (51a, 51b, 51c) associé à l'utilisateur par des premières informations d'association (210) ;
lorsque le groupe est spécifié, le fait de spécifier un réseau (NETWORK A~B, 52a, 52b, 52c) associé au groupe par des deuxièmes informations d'association (240) distinctes des premières informations d'association, parmi une pluralité de réseaux connectés au système de traitement d'informations, en tant que réseau accessible à l'utilisateur ; le programme étant **caractérisé en ce que** le processus comprend en outre :
en réponse à une demande d'utilisation du système de traitement d'informations par l'utilisateur, lorsqu'aucun des réseaux de la pluralité n'est associé à l'utilisateur, le fait de spécifier un réseau prédéterminé en tant que réseau accessible à l'utilisateur, le réseau prédéterminé étant stocké dans une unité de stockage par un administrateur.
